**Europäisches Patentamt**

**European Patent Office**

**Office européen des brevets**

(19)

(11) Veröffentlichungsnummer: **0 010 127 B1**

(12) ## EUROPÄISCHE PATENTSCHRIFT

(45) Veröffentlichungstag der Patentschrift:
**23.09.81**

(51) Int. Cl.³: **F 16 D 3/76**, F 16 D 3/52

(21) Anmeldenummer: **79102853.3**

(22) Anmeldetag: **08.08.79**

(54) **Drehelastische stoss- und schwingungsdämpfende Kupplung.**

(30) Priorität: **14.10.78 DE 2844849**

(43) Veröffentlichungstag der Anmeldung:
**30.04.80 Patentblatt 80/9**

(45) Bekanntmachung des Hinweises auf die Patenterteilung:
**23.09.81 Patentblatt 81/38**

(84) Benannte Vertragsstaaten:
**AT BE DE FR GB IT NL SE**

(56) Entgegenhaltungen:
**DE-A-1 475 339**
**DE-A-2 214 093**
**DE-A-2 255 680**
**DE-A-2 318 612**
**DE-A1-2 626 414**
**DE-A1-2 657 527**
**DE-B2-2 251 236**

(73) Patentinhaber: **Thyssen Industrie AG, Am Thyssenhaus 1, D-4300 Essen (DE)**

(72) Erfinder: **Krönert, Curt, Hochfelder Strasse 78, D-4330 Mülheim (DE)**

(74) Vertreter: **Eberhard, Friedrich, Dr., Am Thyssenhaus 1, D-4300 Essen (DE)**

## Drehelastische stoß- und schwingungsdämpfende Kupplung

Die Erfindung betrifft eine drehelastische stoß- und schwingungsdämpfende Kupplung, bei der zwei Kupplungsringe durch ein im Querschnitt bogenförmiges gummielastisches Druckkissen sowie durch gleichmäßig über den Umfang der Kupplung verteilte und mit dem Druckkissen verbundene Seilstränge eines nicht dehnbaren Verbindungsseiles oder mehrerer solcher Seile verbunden sind.

Von den beiden Kupplungsringen ist der eine, in der Regel der innere, mit der antreibenden Welle einer Maschine verbunden und der andere in der Regel der äußere Kupplungsring, mit der anzutreibenden Welle. Den Verbindungsseilen bzw. deren Seilsträngen kommt die Aufgabe zu, das Drehmoment von dem einen Kupplungsring auf den anderen zu übertragen, während das gummielastische Druckkissen die Seilstränge abstützt und insbesondere die Drehelastizität- und die Schwingungsdämpfung der Kupplung beeinflußt.

Aus der deutschen Offenlegungsschrift 23 18 612 ist eine Kupplung dieser Art bekannt, bei der das Druckkissen aus einer mit einem Druckmittel gefüllten und flexiblen Hülle besteht und nicht dehnbare Seile aus Kunststoff um das Druckkissen herumgeführt oder in dieses eingebettet sind. Diese Kupplung hat u. a. den Nachteil, daß ihre Drehelastizität erheblich von der Größe des Druckes abhängig ist, unter dem das Druckmittel steht, welches das Druckkissen füllt. Abgesehen von nicht auszuschließenden Leckverlusten, ändert sich der Innendruck des Druckkissens im Laufe des Betriebes infolge von Temperaturschwankungen, denen die Kupplung unterworfen ist, so daß auch die Drehelastizität der Kupplung erheblichen Schwankungen unterliegt.

Eine weitere Kupplung der eingangs genannten Art ist aus der deutschen Offenlegungsschrift 26 26 414 bekannt. Sie unterscheidet sich von der vorgenannten Kupplung im wesentlichen dadurch, daß das Druckkissen nicht mit einem Druckmittel gefüllt ist, sondern aus einem formbeständigen Gummiteil mit einem in Axialrichtung nach einer Seite hin offenen mantelförmigen Ringraum besteht.

Den beiden vorgenannten Kupplungen ist gemeinsam, daß die Elastizität der Kupplung im wesentlichen durch die Elastizität des Druckkissens bestimmt ist, während die durch Öffnungen in den durch das Druckkissen verbundenen Kupplungsringen geführten und in diesen festgelegten Seile lediglich durch die Abstützung der Seilstränge auf dem gewölbten Druckkissen zur Stoß- und Schwingungsdämpfung der Kupplung beitragen. Allein schon aus konstruktiven Gründen ergibt sich eine erhebliche Biegesteifigkeit der Kupplungsringe, da deren Befestigung an den durch die Kupplung zu verbindenden Wellen gewisse Mindestabmessungen erfordert, die z. B. bei dem Außenring wesentlich von der Anzahl und dem Durchmesser der erforderlichen Verbindungsschrauben sowie der Öffnungen bestimmt sind, die für die Verbindungsseile erforderlich sind. Beispielsweise verhält sich die Steifigkeit des äußeren Kupplungsringes zur Steifigkeit der Seilstränge bei derartigen Kupplungen wie etwa 10 000 : 1. Hieraus folgt, daß Unterschiede in den Längen der Seilstränge zwangsläufig auch deren unterschiedliche Belastung zur Folge haben. Da die Verbindungsseile bzw. die Seilstränge an den Wandungen und Kanten der Öffnungen anliegen, durch die sie hindurchgeführt sind, werden sie bei Stoß-Beanspruchungen sowie bei Drehmomentänderungen der Kupplung an den Bohrungskanten scharf geknickt und infolge der hierbei auftretenden Kerbwirkung leicht beschädigt.

In der DE-A 26 57 527 ist eine drehelastische Kupplung der eingangs genannten Art vorgeschlagen worden, bei welcher der letztgenannte Nachteil dadurch vermieden werden soll, daß die Öffnungen in denen die Verbindungsseile an den Kupplungsringen befestigt sind, mit Büchsen oder Beschichtungen versehen sind, insbesondere solchen aus Kunststoff. Diese Büchsen bzw. Beschichtungen sollen bewirken, daß die Seile bzw. Seilstränge ohne große Reibung in den Öffnungen gleiten können, so daß Kantenpressungen vermieden werden. Es hat sich jedoch gezeigt, daß Seilschäden infolge starker Seilkrümmungen an den Öffnungskanten durch diese bekannten Maßnahmen nicht beseitigt werden, sondern bei großen Drehmomentänderungen doch Seilbrüche durch Kerbwirkung an den Öffnungskanten auftreten.

Der Erfindung liegt die Aufgabe zugrunde, die Durchführung und die Auflagerung der Seile bzw. Seilstränge durch die Öffnungen bzw. an den an diesen befindlichen Seilumlenkpunkten derart zu verbessern, daß die radiale Nachgiebigkeit der Seilanlenkungen an den Kupplungsringen dem elastischen Verhalten der Verbindungsseile weitestgehend entspricht und Seilbrüche an den Öffnungskanten — den Seilumlenkpunkten — ausgeschlossen sind.

Ausgehend von der letztgenannten Kupplung, besteht die Lösung dieser Aufgabe darin, daß die Öffnungen für die Seile in den Kupplungsringen so groß sind, daß die Seilstränge auch bei größtmöglichem Verdrehwinkel der Kupplung nicht an den Wandungen der Öffnungen anliegen und jeder Seilstrang an wenigstens einem der beiden Kupplungsringe im Bereich der Öffnung mittels Federkörper in radialer Richtung elastisch nachgiebig gelagert ist. Für die Erfindung ist es dabei unerheblich, ob die Seile bzw. Seilstränge in das sie stützende gummielastische Druckkissen eingebettet sind oder auf diesem liegen und nur von einer verhältnismäßig dünnen Gummischicht bedeckt sind.

Durch die erfindungsgemäße Lagerung der Verbindungsseile bzw. der Seilstränge wird insbesondere der Vorteil erreicht, daß die Federkörper einen ungehinderten Längenausgleich der Seilstränge ermöglichen, so daß alle Seilstränge schließlich gleichmäßig an der Kraftübertragung beteiligt sind. Ein weiterer Vorteil liegt in der schonenden Seilbeanspruchung an den federnd nachgiebigen Seilauflagerungen sowie in den vergrößerten Öffnungen für den Seildurchzug, durch welche Seilknickungen und damit Kerbbeanspruchungen der Seile bei großen Verdrehwinkeln der Kupplung an den Seil-Umlenkstellen vermieden sind.

Bei beiden erstgenannten Kupplungen (DE-A 23 18 612 und DE-A 26 26 414) sowie bei den aus den deutschen Offenlegungsschriften 22 14 093 und 22 55 680 sowie aus der DE-B 22 51 236 bekannten Kupplungen soll die Biegesteifigkeit des äußeren Kupplungsringes dazu benutzt werden, eine gleichmäßige Beteiligung aller Verstärkungseinlagen wie Verbindungsseile, Fäden und Fadenpakete zu erzielen. Es hat sich jedoch gezeigt, daß die unvermeidbaren Längenunterschiede der Verbindungsseile bzw. der den Seilen ähnlichen Fadeneinlagen durch die Biegesteifigkeit der Kupplungsringe nicht ausgeglichen werden können, so daß die Verbindungsseile bzw. Fäden unterschiedlich belastet werden. Insbesondere bei den drei letztgenannten Ausführungen, bei denen die Fäden neben- und aufeinanderliegen, treten, nicht zuletzt durch die scharfen Umlenkungen dieser Verstärkungseinlagen insbesondere am äußeren Kupplungsring, Seilbrüche bzw. Fadenbrüche auf. Bei diesen Kupplungen, bei denen Einzelfäden über den ganzen Umfang verteilt oder in Sektoren angeordnet sind, sind biegesteife Kupplungsringe unerläßlich, und die vorgenannten Nachteile müssen in Kauf genommen werden. Dagegen wurde festgestellt, daß bei punktartigen Seilanlenkungen, wie sie aus den deutschen Offenlegungsschriften 23 18 612, 26 26 414 und 26 57 527 bekannt sind, die Seilanlenkpunkte in radialer Richtung nachgiebig sein können. Diese Erkenntnis führte zu der vorliegenden Erfindung.

Die vorliegende Erfindung verzichtet im Bereich der Durchführung jedes Verbindungsseil-Stranges durch den jeweiligen Kupplungsring bewußt auf die Steifigkeit der Kupplungsringe, und durch die erfindungsgemäße Anordnung von Federkörpern für die Seillagerung wird tatsächlich die erwünschte gleichmäßige Beteiligung jedes Seilstranges an der Kraftübertragung erreicht. Hinzu kommen sowohl eine günstige Beeinflussung der Stoß-Elastizität der Kupplung als auch das sichere Vermeiden von Kerbbeanspruchungen an den Seilumlenkpunkten.

Als konstruktiv besonders vorteilhaft hat sich eine Ausführung gezeigt, bei der die Federkörper aus elastomerem Material bestehen, da derartige Federkörper sowohl hinsichtlich ihrer Elastizität als auch in bezug auf die Ausführungsgestalt der Kupplung verhältnismäßig einfach modifizierbar sind. Dabei hat sich als zweckmäßig erwiesen, die Federkörper in entsprechende Vertiefungen bzw. Aussparungen des jeweiligen Kupplungsringes einzulassen. Auf diese Weise lassen sie sich ohne besondere Befestigungsmittel örtlich festlegen, so daß sie ihre Lage bei schräg auftretenden Zugbelastungen nicht ändern.

In manchen Fällen ist es möglich, die Federkörper der einzelnen Seilstränge zu einem elastischen Ring miteinander zu verbinden, doch sind bei einer derartigen Ausführung besondere Maßnahmen zu treffen, damit weder dieser Ring noch einer der Seilstränge seine einmal vorgegebene Lage verändern kann. Als besser hat sich eine Lösung gezeigt, bei der jeweils zwei Seilstränge in einem gemeinsamen Federkörper gelagert sind; denn einerseits sind für die Fertigung der Kupplung diese Federkörper von ihrer Größe her handlicher als Einzelfederkörper für jeden Seilstrang, andererseits lassen sie sich konstruktiv sowohl einfach gestalten als auch mit einfachen Mitteln, beispielsweise durch seitliche Anschläge im Kupplungsring oder durch Anordnung entsprechend geformter Mulden im Kupplungsring, an diesem örtlich festlegen.

In besonderen Fällen, insbesondere für Kupplungen mit außerordentlich großen Stoßbelastungen und/oder Verdrehwinkeln, ist es vorteilhaft, als Federkörper eine den jeweiligen Seilstrang im Auflagebereich an dem betr. Kupplungsring in seitlicher Richtung halternde Metallfeder anzuordnen.

In der Zeichnung sind Ausführungsbeispiele der Erfindung dargestellt.

Fig. 1 stellt eine Seitenansicht einer erfindungsgemäßen Kupplung entsprechend Pfeilrichtung B in Fig. 2 dar

Fig. 2 zeigt den Querschnitt A-A aus Fig. 1,

Fig. 3 zeigt im Ausschnitt die Ansicht C aus Fig. 2,

Fig. 4 stellt ebenfalls eine Seitenansicht entsprechend Pfeilrichtung B in Fig. 2 dar, jedoch mit anderer Ausführung der erfindungsgemäßen Federkörper,

Fig. 5 zeigt den Schnitt D-D aus Fig. 4,

Fig. 6 stellt die Ansicht C aus Fig. 2 im Ausschnitt bei einer Ausführung des erfindungsgemäßen Federkörpers als Metallfeder dar,

Fig. 7 zeigt den Schnitt E-E aus Fig. 6.

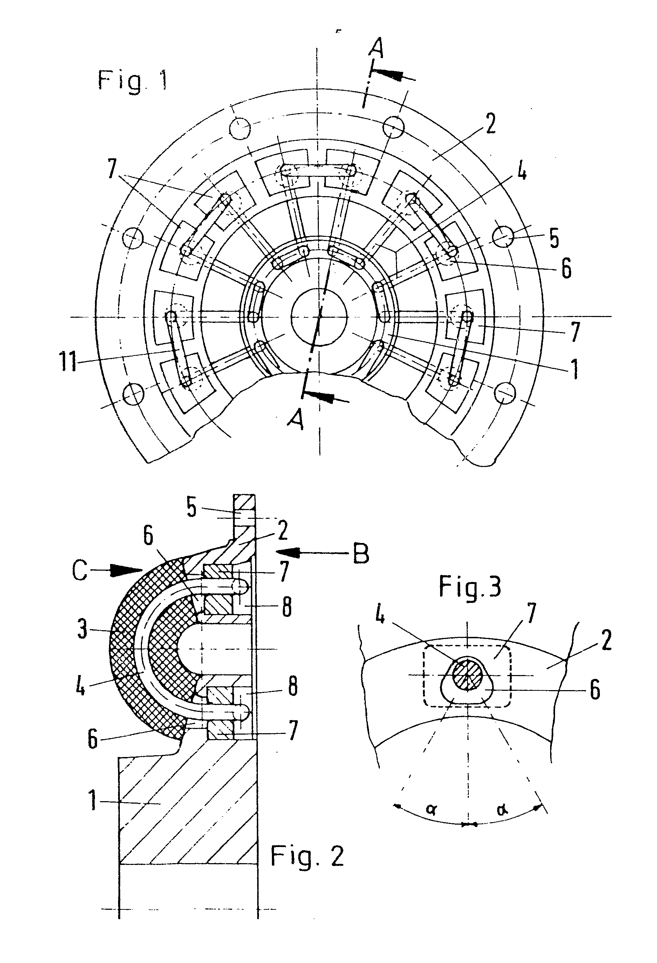

Der Übersichtlichkeit der Zeichnung wegen, ist das gummielastische Druckkissen, das den inneren und den äußeren Kupplungsring miteinander verbindet, in den Fig. 1, 3, 4 und 6 nicht gezeichnet.

In dem Ausführungsbeispiel der Fig. 1 bis 3 besteht die erfindungsgemäße Kupplung im wesentlichen aus dem inneren Kupplungsring 1, dem äußeren Kupplungsring 2 und dem im Querschnitt bogenförmigen gummielastischen Druckkissen 3 sowie den gleichmäßig über den Umfang der Kupplung verteilten Seilsträngen 4. Diese Seilstränge 4 sind in an sich bekannter Weise von einem Verbindungsseil aus Kunststoff gebildet, das in einem Zuge durch alle dafür vorgesehenen Öffnungen 6 in dem inneren Kupplungsring 1 und dem äußeren Kupplungsring 2 gezogen und in das Druckkissen 3 eingebettet ist. In dem äußeren Kupplungsring 2 sind einerseits Bohrungen 5 für Schrauben angeordnet, mit deren Hilfe die Kupplung in üblicher Weise an einem nicht dargestellten anzutreibenden Maschinenteil befestigt ist, andererseits Öffnungen 6, durch welche die Seilstränge 4 gezogen sind. Von gleicher Art wie die Öffnungen 6 im äußeren Kupplungsring 2 sind die Öffnungen 6 im inneren Kupplungsring 1, der auf einer nicht dargestellten antreibenden Welle in üblicher Weise befestigt ist. Die Öffnungen 6 sind so groß ausgebildet und geformt (vgl. Fig. 3), daß die Seilstränge 4 auch bei größtmöglichem positiven oder negativen Verdrehwinkel der Kupplung nicht an ihren Wandungen anliegen. Jeder Seilstrang 4 ist an dem äußeren Kupplungsring 2 im Bereich der jeweils zugehörigen Öffnung 6 mit einem Federkörper 7 aus elastomerem Material elastisch nachgiebig abgestützt und in seitlicher Richtung weitgehend unverschieblich gehalten. Um die Federkörper 7 selbst gegen Verschieben zu sichern sowie aus Platzgründen und um zu vermeiden, daß sie aus den Außenflächen der Kupplungsringe 1 und 2 herausragen, sind sie in diese eingelassen, und zwar in Mulden 8.

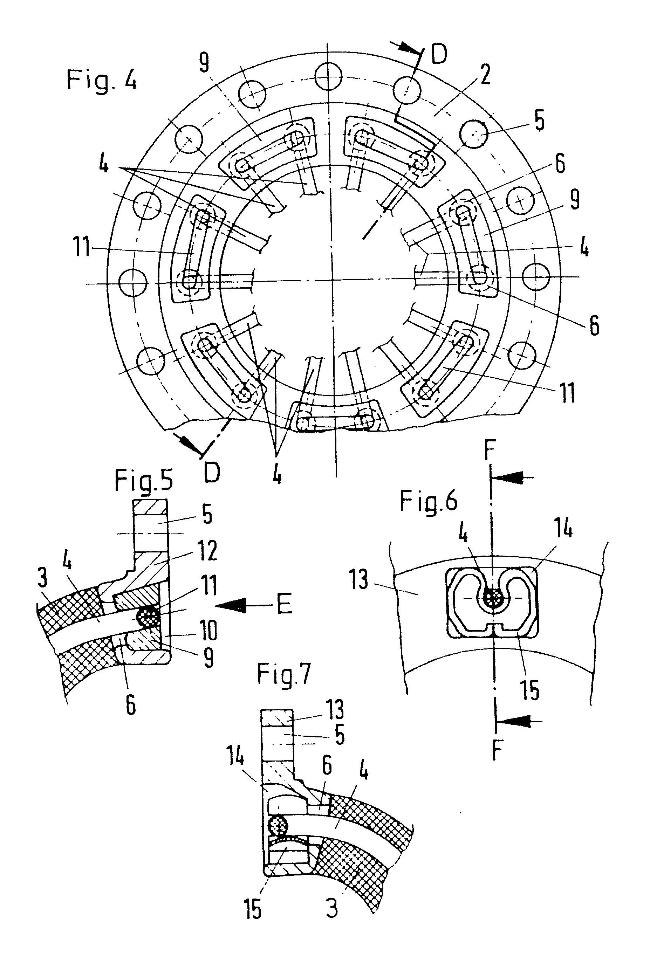

Von dem Ausführungsbeispiel der Fig. 1 bis 3 unterscheidet sich das Ausführungsbeispiel nach den Fig. 4 und 5 im wesentlichen dadurch, daß bei diesem jeweils zwei Seilstränge 4 in einem gemeinsamen Federkörper 9 gelagert sind. Jeder Federkörper 9 ist in gleicher Weise in den Kupplungsring 12 eingelassen wie die Federkörper 7 in den Kupplungsring 2. Vertiefte Aufnahmekammern bzw. Mulden 10 nehmen die Federkörper 9 auf und verhindern zugleich Lageänderungen derselben.

Im Ausführungsbeispiel der Fig. 6 und 7 ist im Ausschnitt aus einem Kupplungsring 13 entsprechend Ansicht C in Fig. 2 gezeigt, wie ein aus einer Metallfeder bestehender, in den Kupplungsring 13 eingesetzter Federkörper 15 für die Abstützung eines Seilstranges 4 ausgebildet sein kann. Durch die Form des Federkörpers 15 ist der Seilstrang 4 einerseits in seitlicher Richtung gehalten (vgl. Fig. 6), andererseits durch im Auflagebereich des Seilstranges 4 sattelartige Krümmung des Federkörpers 15 (vgl. Fig. 7) ohne Zwängungen und Krümmungen über diesen sowie sicher gegen Berührungen mit den Wandungen der Öffnung 6 durch die Kammer 14 in das Druckkissen 3 geführt. Mit 11 sind von einer Öffnung 6 zur folgenden Öffnung 6 führende Teile eines die Seilstränge 4 bildenden Seiles bezeichnet.

## Patentansprüche

1. Drehelastische stoß- und schwingungsdämpfende Kupplung, bei der zwei Kupplungsringe 1 mit 2 bzw. 12 bzw. 13 durch ein im Querschnitt bogenförmiges gummielastisches Druckkissen (3) sowie durch gleichmäßig über den Umfang der Kupplung verteilte, durch Öffnungen (6) der Kupplungsringe (1, 2, 12, 13) geführte und mit dem Druckkissen verbundene Seilstränge (4) eines nicht dehnbaren Verbindungsseiles oder mehrerer solcher Seile verbunden sind, dadurch gekennzeichnet, daß die Öffnungen (6) für die Seile in den Kupplungsringen (1, 2, 12, 13) so groß sind, daß die Seilstränge (4) auch bei größtmöglichem Verdrehwinkel der Kupplung nicht an den Wandungen der Öffnungen (6) anliegen und jeder Seilstrang (4) an wenigstens einem der beiden Kupplungsringe (1, 2, 12, 13) im Bereich der Öffnung (6) mittels Federkörper (7, 9, 15) in radialer Richtung elastisch nachgiebig abgestützt ist.

2. Drehelastische Kupplung nach Anspruch 1, dadurch gekennzeichnet, daß die elastischen Federkörper (7, 9) aus elastomerem Material bestehen.

3. Drehelastische Kupplung nach Anspruch 1 oder 2, dadurch gekennzeichnet, daß die Federkörper (7, 9, 15) in den betreffenden Kupplungsring (1, 2, 12, 13) eingelassen sind.

4. Drehelastische Kupplung nach einem der Ansprüche 1 bis 3, dadurch gekennzeichnet, daß jeweils zwei Seilstränge (4) in einem gemeinsamen Federkörper (9) gelagert sind.

5. Drehelastische Kupplung nach einem der Ansprüche 1 und 3 oder 4, dadurch gekennzeichnet, daß als Federkörper (15) an dem betreffenden Kupplungsring (13) eine den jeweiligen Seilstrang (4) in seitlicher Richtung halternde Metallfeder angeordnet ist.

## Claims

1. Torsionally elastic shock-absorbing and vibration-absorbing coupling, in which two coupling rings (1 with 2 or 12 or 13) are connected by a resilient pressure cushion (3) arcuate in cross-section and by rope strands (4) of a non-extensible connecting rope or of several such ropes, said strands being distributed uniformly over the periphery of the coupling, being guided through orifices (6) of the coupling rings (1, 2, 12, 13) and being connected to the pressure cushion, characterised in that the orifices (6) for the ropes in the coupling rings (1, 2, 12, 13) are so large that, even at the largest possible twisting angle of the coupling, the rope strands (4) do not lie against the walls of the orifices (6), and each rope strand (4) is supported, to yield elastically in a radial direction, by means of spring bodies (7, 9, 15) on at least one of the two coupling rings (1, 2, 12, 13) in the region of the orifice (6).

2. Torsionally elastic coupling according to Claim 1, characterised in that the elastic spring bodies (7, 9) are made of elastomeric material.

3. Torsionally elastic coupling according to Claim 1 or 2, characterised in that the spring bodies (7, 9, 15) are set into the respective coupling ring (1, 2, 12, 13).

4. Torsionally elastic coupling according to one of Claims 1 to 3, characterised in that any two rope strands (4) are mounted in a common spring body (9).

5. Torsionally elastic coupling according to one of Claims 1 and 3 or 4, characterised in that a metal spring retaining the respective rope strand (4) in a lateral direction is located, as a spring body (15), on the coupling ring (13) in question.

**Revendications**

1. Accouplement élastique en torsion amortissant les chocs et les vibrations, comprenant deux anneaux (1; 2, 12, 13) unis par un coussin élastique de pression (3) à section droite arquée et par des brins (4) d'une ou de plusieurs cordes non extensibles, régulièrement répartis sur le pourtour de l'accouplement, qui passent par des ouvertures (6) des anneaux (1; 2, 12, 13) et sont liés au coussin de pression, caractérisé par le fait que les ouvertures (6) des anneaux (1; 2, 12, 13) par où passent les cordes sont de dimension telle que les brins de corde (4), même en cas de torsion maximale de l'accouplement, ne s'appuient pas sur les parois de ces ouvertures (6), et que chaque brin de corde (4), sur au moins un des deux anneaux (1; 2, 12, 13), est soutenu élastiquement dans la direction radiale, dans la zone de l'ouverture (6), par un corps élastique (7, 9, 15).

2. Accouplement élastique en torsion selon la revendication 1, caractérisé par le fait que les corps élastiques (7, 9) sont en élastomère.

3. Accouplement élastique en torsion selon l'une des revendications 1 ou 2, caractérisé par le fait que les corps élastiques (7, 9, 15) sont encastrés dans l'anneau (1; 2, 12, 13) où ils se trouvent.

4. Accouplement élastique en torsion selon l'une des revendications 1 à 3, caractérisé par le fait que deux brins de corde (4) sont montés dans chaque corps élastique (9).

5. Accouplement élastique en torsion selon la revendication 1 et l'une des revendications 3 et 4, caractérisé par le fait qu'est monté, comme corps élastique (15) sur l'anneau (13), un ressort métallique qui tient le brin de corde (4) dans la direction latérale.

Fig. 1

A

Fig. 2

C → → B

Fig. 3

α   α

Fig. 4

Fig.5

Fig.6

Fig.7